# EUROPEAN PATENT APPLICATION

(11) **EP 1 164 488 A1**
(43) Date of publication of application: **19.12.2001**
(21) Application number: 00401687.9
(22) Date of filing: 14.06.2000
(51) Int. Cl.: G06F 11/36

(54) **Remote debugging in an embedded system enviroment**

(71) Applicant: Canal+ Technologies Société Anonyme, 75516 Paris Cedex 15 (FR)
(72) Inventor: GUISSOUMA, Habib c/o CANAL+TECHNO. SOCIETE ANONYME, 75906 Paris Cedex 15 (FR)
(74) Representative: Cozens, Paul Dennis

(57) **Abstract**

A software debugging for an embarked system environment provides for compiling software modules and a debugger module on a workstation. The obtained executable test file is transferred to the embarked system where it is executed. The debugger module may output information on commands being executed to a client on the workstation. In one embodiment specific code containing information of the software modules is included in the debugger module. In another embodiment the software modules register commands and a point of entry to the debugger module.

## Description

The present invention relates to debugging in an embarked system environment such as, for example, an integrated receiver for digital television,

The development of software generally involves a debugging process before the software is released for its use. The debugging process allows to remove errors in the implementation of the software. Such errors could for example cause the software to interrupt its execution in an unpredictable way because of faulty commands or in some cases even generate erroneous results or dangerous operation of machines controlled by the software.

It is know from software development in UNIX computer environments to insert debug code in the software code. The debug code usually has no useful function for the software. It will merely be used in conjunction with the debugging process. The debug code is deleted from the software once the debugging process is completed. This reduces the size of the final software code file.

The debug code enables a plurality of debugging functions. The debug code may for example define marks in the software in order to monitor how the software is executed or in order to indicate a halting point at which the execution of the software is to be halted. The debug code may also enable the return of a value to the user of a determined variable or memory content.

Once the software code to test and its debug code are ready to test, the whole may be compiled to obtain an executable debug file.

A next step in the debugging process involves executing a debugging software in a UNIX process and the executable debug file in another UNIX process. The debugging software allows for example to identify the aforementioned halting points at which the execution of the executable debug file may be halted or the printing on a screen of memory content which Is or Is not affected by the running of the executable debug file. Other functionalities may be provided.

The debugging software requires information about data structures used in the software code and during compiling of the code in order to identify these data structures during the debugging process. Such information may for example be the size of data structures measured in bits. The debugging software further requires information about the system on which the compiled software, i.e., the executable debug file is being executed in order to interact with this system. Such information may for example be which mechanisms are used by the system to initiate signal exchanges between the executed software and the system. In a UNIX software development environment which typically comprises a workstation and a mass storage medium such as a magnetical hard disk drive, the information required by the debugger software may easily be stored and retrieved.

Hence the debugger software may interact with the executable debugger file due to its knowledge of the system. The debugger software may for example cause the running executable debug file to halt by substituting an appropriate instruction to a command included in the executable debug file's program code. In a similar way the debugger software may cause the running to resume by removing the latter appropriate instruction and replacing it by the original command of the executable debug file, and trigger the further execution of the executable debug file.

The debugger software could also cause the executable debug file to be executed departing from a determined line in the program code. The determined line could for example be indicated by the user.

Another useful feature of the debugger software is the possibility to modify the value of memory content, e.g., modifying a value of a variable used by the executable debug file, This allows to simulatc tho behaviour of the software being tested for selected values of the concerned variable.

The software development for an embarked environment may require an adapted debugging process,

An example for an embarked environment is an Integrated Receiver IRD as used for receiving and decoding TV and other application, which are broadcast as a flow of digital data. An IRD comprises a storage in which software may be stored and a microprocessor which allows to run the software. The IRD further comprises an operating system as well as appropriate drivers and components. One difference between an IRD or embarked environments in general and a workstation is that they generally have smaller computing and/or memory capacity.

The software development for the embarked environment is typically done using a workstation WS. The software code may be prepared with an appropriate editor and a debugging of the software may be performed on the workstation itself. The debugging could for example make use of a simulator which allows to execute the software by simulating the embarked environment. An inconvenience of this way of debugging is that a simulation of the embarked environment is likely not to reflect the exact same behaviour as the embarked environment itself. This becomes even more critical if the embarked environment is subject to changes in its configuration and the simulator needs to be modified accordingly.

The aim of the present invention is to overcome the inconveniences of the prior art.

Accordingly in a first aspect the invention provides a method of debugging a software comprising at least one software module which contains code to implement at least a command, comprising creating an executable test file by compiling the software module together with a debugger module.

In a first preferred embodiment of the invention the method of debugging further comprises to include specific code which contains information on the software module in the debugger module.

In a second preferred embodiment the method of debugging comprises executing the executable test file and calling a command implemented by the software module by using the specific code.

In a third preferred embodiment the method of debugging comprises registering a command and a point of entry of the software module at the debugger module, the point of entry being intended to be used by the debugger module to access the command.

In a fourth preferred embodiment the method of debugging further comprises to include an agent in the software module which allows to interface with the debugger module.

In a fifth preferred embodiment the method of debugging comprises compiling the software module and the debugger module on a workstation, transferring the executable test file to an embarked system environment, and executing the executable test file in the embarked system environment.

In a sixth preferred embodiment the method of debugging further comprises running a client software terminal on the workstation and exchanging data between the executed executable test file and the client software terminal, the data exchange being handlled by the debugger module.

### Brief description of the figures

Figure 1 contains a schematic illustration of a software development environment for an embarked system;
Figure 2 illustrates logical layers of an embarked system environment;
Figure 3 contains a block diagram illustrating a method to obtain an executable file for an embarked system ;
Figure 4 contains a block diagram illustrating a method to obtain an executable test file;
Figure 5 shows a logical build-up of a debugger module according to the invention ;
Figure 6 contains software modules and a debugger module according to the invention ;
Figure 7 contains other software modules and a debugger module according to the invention.

### Detailed description of preferred embodiments

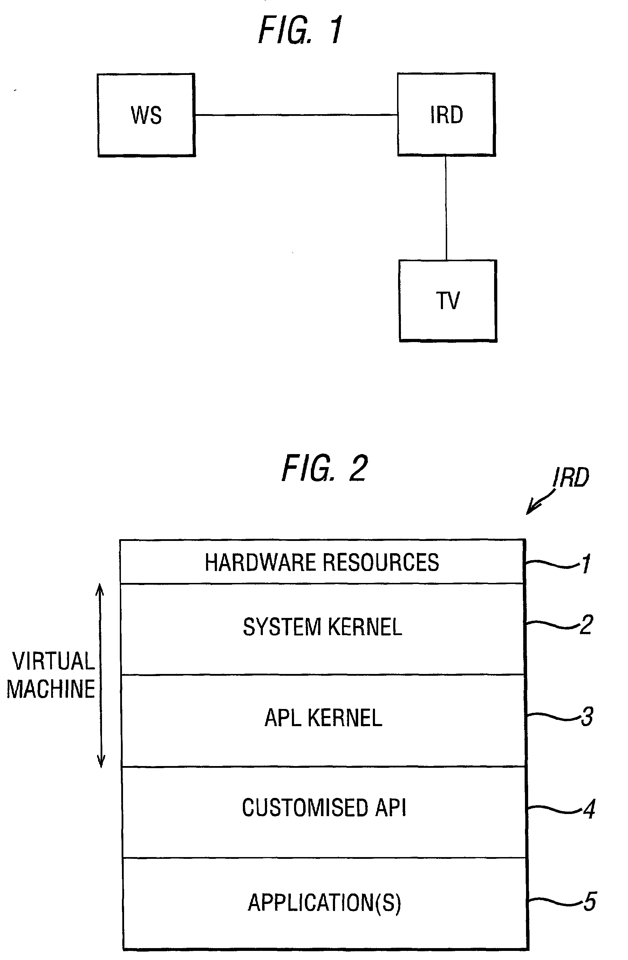

Referring to Fig. 1 a software development system for an embarked environment comprises a workstation WS an integrated receiver IRD as embarked environment. As known from prior art the software code may be prepared on the workstation WS using an appropriate editor. A preliminary debugging of the software may be performed on the workstation WS itself. The debugging may make use of a simulator which allows to execute the software by simulating the embarked environment. The software is subsequently transferred to the IRD where further debugging will be done. The IRD is connected to an output device such as a television TV on which video and audio signals may be rendered.

Referring now to Fig. 2, a schematic representation of the IRD in form of logical layers shows a hardware resource layer 1 which corresponds to low level software such as drivers required to make use of the IRD hardware features. The hardware resource layer 1 is typically provided with the IRD hardware by the IRD manufacturer.

A virtual machine comprising a system kernel layer 2 and an Advanced Programming Language APL kernel layer 3 provides an environment for running software written in the advanced programming language, such as for example the JAVA ™ language. The virtual machine may be downloaded to the IRD during the software development phase for testing or by the manufacturer before the IRD is delivered to customers.

A customised Application Programming Interface API 4 may be provided to be executed on top of the virtual machine. The API allows to create an interface between the virtual machine and the programmers of application. The API may be entirely specified, e.g. by means of an industry standard.

An application layer 5 represents software to be executed by the virtual machine. The software may for example be an interactive television guide programme which will be downloaded by the IRD when it is connected to an appropriate source such as a cable network, a satellite dish receiver or a terrestrial antenna by means of which digital TV data may be received.

Typically the APL kernel 3 software is developed using the software development system in Fig. 1.

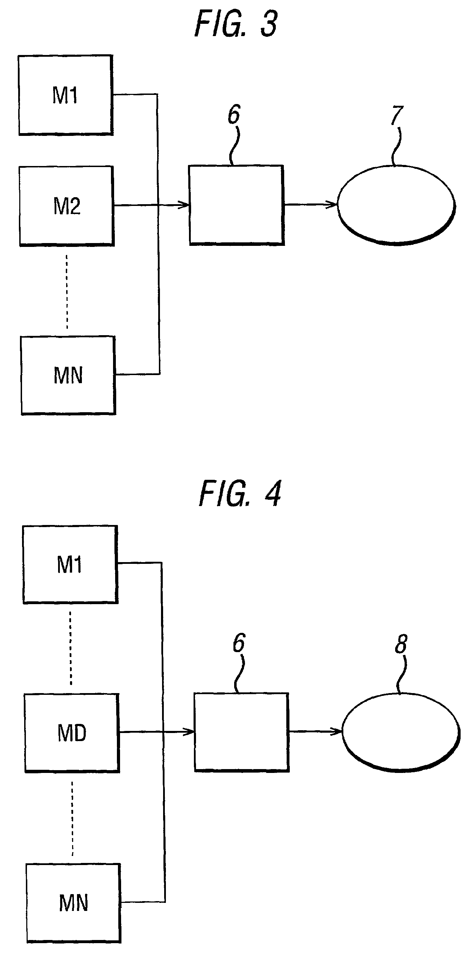

Referring to Fig. 3 the APL kernel software may comprise one or more modules M1, M2, ....MN which is or are subject to a compilation 6 to obtain an executable file 7. The executable file 7 is downloaded from the workstation WS to the IRD where it may be executed.

Referring to Fig. 4 the debugging process of the APL kernel software is prepared on the workstation WS by including a debugger module MD at the compilation 6 of the APL kernel software in order to obtain an executable test file 8. The executable test file 8 is downloaded from the workstation WS to the IRD where it may be executed.

During execution of the executable test file 8 typical debugging action such as halting the execution, returning values of variables, modifying the executable test file 8 and others may be undertaken as will be explicated below.

### First preferred embodiment

### Software module(s) M1, M2, ... of APL kernel

The software module(s) of the APL kernel is/are designed to offer an Application Programmer Interface which is specified in the Advanced Programming Language interface.

Generally there may be a plurality of modules which each provide a distinct type of functionalities, i.e., one module may be dedicated to the handling of a file system in the virtual machine, another module may be dedicated to communication of signals from the application to hardware interfaces of the IRD, a further module may provide access to graphical display features ...

Each software module thus provides code for implementing commands which may be used, after compilation, in the virtual machine of the IRD to access the functionalities associated to the module. The software module further provides data structures associated to the commands.

### Debugger module MD

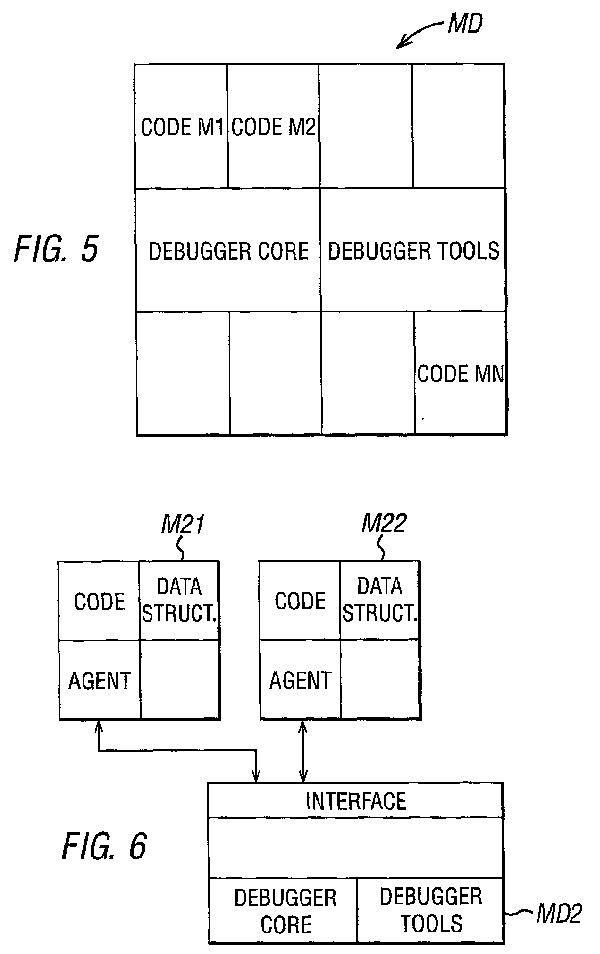

Referring to Fig. 5 a schematic representation of the debugger module MD will be used to better understand the functionalities associated to it. The representation is not intended to reflect an actual implementation in code of the debugger module MD.

The debugger module MD comprises specific code represented in boxes labelled code M1, code M2 ... code MN. This specific code contains information on each software module to be included in the compilation with the debugger module. More precisely this specific code may comprise a description of commands and data structures provided by each module.

The debugger module further comprises code for implementing debugger tools commands. These debugger tools commands may for example be the following :
- A set of functions for implementing communication with a client of the debugger module MD, i.e., a software which runs on a workstation such as WS in Fig. 1 and which allows to display data outputted by the debugger module MD to the user or to receive instructions from a user before transmitting these to the debugger module MD. This set of functions may allow to format and to send a chain of characters;
- A set of functions for handling instructions contained in a command line inputted from the client;
- A set of functions to control the execution of the executable test file being debugged;
- A set of functions to handle a configuration of the debugger module, i.e., to indicate how the debugger module will behave when it encounters errors during execution of the executable test file being debugged ;

Generally speaking the debugger tools comprise commands which are of use for most or all of the software modules. This allows to reduce the size of the executable test file because such commands do not have to be implemented in the individual software modules.

A debugger core of the debugger module MD makes use of the specific code in boxes Code M1, Code M2, ..., and of the debugger tools to interact with the software modules M1, M2, ... during debugging and in accordance with instructions received by a user through the client of the debugger module.

### Second preferred embodiment

### Software modules M21, M22, ... of APL kernel

Referring to Fig. 6 and similar to what has been describe for the first preferred embodiment software modules M21 and M22 provide code for implementing commands which may be used, after compilation, in the virtual machine of the IRD, and data structures associated to the commands.

Fig. 6 contains a schematic representation of 2 software modules M21 and M22. It will be clear for a person skilled in the art that only one module or a greater number of modules may also be used.

In addition to what has been described for the first preferred embodiment, the software modules M21 and M22 each comprise an agent code which allows to establish communication with a debugger module MD2.

### Debugger module MD2

In a similar fashion to the debugger module MD described in relation with the first preferred embodiment, the debugger module MD2 comprises code for implementing debugger tools commands and a debugger core.

One difference between debugger modules MD2 and MD is that the former does not necessarily contain code describing the software modules to debug. In other words the debugger module MD2 taken alone has no information about the software modules for which it will be used. Instead the debugger module MD2 will make use of information provided by each software module to debug and contained in the executable test file after compilation.

As a result the debugger module MD2 has a reduced size as compared to the debugger module MD. Furthermore the debugger module MD2 does not need to be updated if a software module to debug is added or suppressed from the executable test file.

The information provided by each software module will make specific commands implemented by each software module available during debugging.

### Debugging with MD2

Similarly as described above for Fig. 4, the software modules M21, M22, ... and the debugger module MD2 are compiled to obtain the executable test file.

During execution of the executable test file the agents of the software modules M21, M22, .... register their respective module at an interface of the debugger module MD2. The debugger module thereby receives for each software module a point of entry of the agent, a list of commands that the agent takes in charge and information concerning online help for using the listed commands. The point of entry indicates to the debugger module MD2 how it can access the agent. This might for example be a logical address. This will be required for example whenever the debugger module MD2 wants to have one of the listed commands executed.

The listed commands allows to access the specific functionalities provided by the software module. Hence the debugger module MD2 may have access to all functionalities of the executable test file even if a software module is added at a further stage of compilation, e.g. if the software needs to be updated,

The debugger module MD2 may transmit to the agent(s) and via the interface a list of debugging tools and services available and required for the debugging. The debugging tools and services are similar to the ones described here above for the debugger module MD. Hence the software module may be accessed by the user by use of the debugger module's client and the software module which is incorporated in the executable test file may return output information to the client.

### Sharing of software module commands

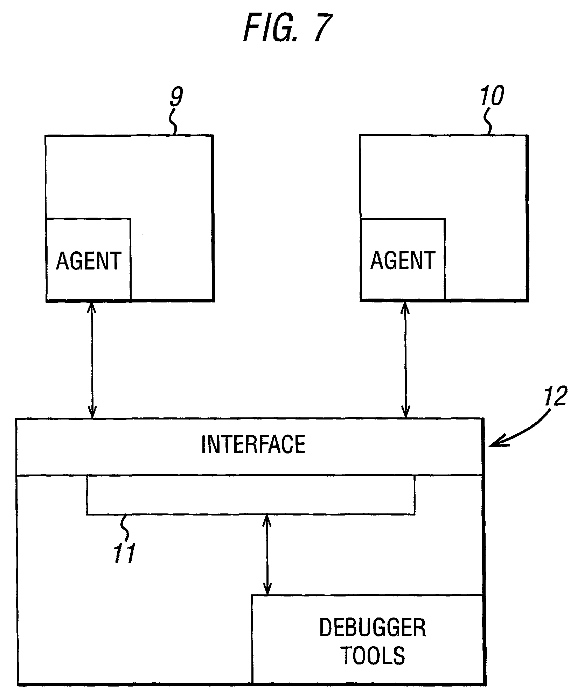

In a preferred embodiment and referring to Fig. 7, an agent of a first software module 9 may have access to a determined command provided by a second software module 10.

The determined command is listed in a list of commands 11 which comprises commands that the second software module has submitted previously to the debugger module 12 by means of its agent and further commands available from the debugger tools, Using the list of commands 11 the debugger module 12 may have access to the determined command by the point of entry of the second software module's agent. The determined command may however not be implemented directly by the debugger module as is the case for the debugging tool commands, since the corresponding code for it is comprised in the second software module. Instead an appropriate code redirects calls of the determined command to the agent of the second software module 10.

Hence the agent of the first software module 9 may call the determined command in the list of commands 11 through the interface of the debugger module 12. The debugger module 12 redirects the call to the agent of second software module 10.

### Communication between debugger module and client

The exchange of information between the debugger module and the client on the workstation may be done over a network or a link which connects both. This may for example be a serial link.

In case the execution of the executable test file is halted, the debugger module transmit a request for prompt to the client. The client will receive from the user and send back to the debugger module the command(s) which are inputted e.g. over a keyboard.

During execution of the executable test file, the debugger module is always ready to receive messages (e.g. commands) from the client.

On receiving a message the debugger module will determine the agent of the software module concerned by the message. This may be done e.g. by identifying the command contained the message. If no agent may be found, the debugger module returns an error message to the client. If an agent is found then the debugger module calls a command handling function of the agent.

The command handling function may be divided as follows :
1) Identification and testing of arguments in the command ;
2) Execution of the command. If there is an action on the embarked environment system then perform this action. If there is a memory content to be read out then display this memory content;
3) Display result of command ;
4) Return an error code to the debugger module.

Once the handling function has been performed and unless the debugger module resumes the execution of the executable test file, the debugger module transmits a request for prompt to the client.

In a preferred embodiment it is possible to modify display options of the debugger module at the prompt. One of these options may correspond to the display of an error code value at the end of processing a command. Hence it is possible to obtain information on the success of executing a command and if no success was achieved, to be informed about the reason of the error.

Each feature disclosed in the description and (where appropriate) the claims and drawings may be provided independently or in any appropriate combination.

In summary, software debugging for an embarked system environment provides for compiling software modules and a debugger module on a workstation. The obtained executable test file is transferred to the embarked system where it is executed. The debugger module may output information on commands being executed to a client on the workstation. In one embodiment specific code containing information of the software modules is included in the debugger module. In another embodiment the software modules register commands and a point of entry to the debugger module.

The term "embarked environment" includes, inter alia, the environment in which the software is to be executed by the end user, such as a receiver/decoder.

The present invention extends to a computer program and a computer program product for carrying out any of the methods as described herein, and a computer readable medium having stored thereon a program for carrying out any of the methods described herein. The invention also extends to a signal embodying a computer program for carrying out any of the methods described herein, and a computer product having an operating system which supports a computer program for carrying out any of the methods described herein.

## Claims

1. A method of debugging software comprising at least one software module which contains code to implement at least a command, comprising
- creating an executable test file by compiling the software module together with a debugger module.

2. A method of debugging according to claim 1, further comprising
- including specific code which contains information on the software module in the debugger module.

3. A method of debugging according to claim 2, further comprising
- executing the executable test file,
- calling a command implemented by the software module by using the specific code.

4. A method of debugging according to claim 1, further comprising
- registering a command and a point of entry of the software module at the debugger module, the point of entry being usable by the debugger module to access the command.

5. A method of debugging according to claim 4, further comprising
- including an agent in the software module for interfacing with the debugger module.

6. A method of debugging according to anyone of the preceding claims, further comprising
- compiling the software module and the debugger module on a workstation,
- transferring the executable test file to an embarked system environment,
- executing the executable test file in the embarked system environment.

7. A method of debugging according to claim 6, further comprising
- running a client software terminal on the workstation and exchanging data between the executed executable test file and the client software terminal, the data exchange being handled by the debugger module.

8. A method of debugging software substantially as herein described.
